(19) Europäisches Patentamt / European Patent Office / Office européen des brevets

(11) **EP 1 583 289 B1**

(12) **FASCICULE DE BREVET EUROPEEN**

(45) Date de publication et mention
de la délivrance du brevet:
**01.08.2018   Bulletin 2018/31**

(51) Int Cl.:
*H04L 12/26* *(2006.01)*    *H04L 12/24* *(2006.01)*
*H04L 12/40* *(2006.01)*

(21) Numéro de dépôt: **05102556.7**

(22) Date de dépôt: **31.03.2005**

(54) **Système de simulation et de test d'au moins un équipement sur un réseau AFDX**

System zur Prüfung und Simulation der Vorrichtung in einem AFDX-Netzwerk

Equipment test and simulation system in an AFDX network

(84) Etats contractants désignés:
**AT BE BG CH CY CZ DE DK EE ES FI FR GB GR
HU IE IS IT LI LT LU MC NL PL PT RO SE SI SK TR**

(30) Priorité: **02.04.2004   FR 0450661**

(43) Date de publication de la demande:
**05.10.2005   Bulletin 2005/40**

(73) Titulaire: **AIRBUS OPERATIONS**
**31060 Toulouse (FR)**

(72) Inventeurs:
• **Calluaud, Jean-Marie**
**31400 Toulouse (FR)**
• **Cloury, Emmanuel**
**31700 Daux (FR)**

(74) Mandataire: **Ahner, Philippe et al**
**BREVALEX**
**95, rue d'Amsterdam**
**75378 Paris Cedex 8 (FR)**

(56) Documents cités:
• **CES: "CES white paper on AFDX"[Online] 25
novembre 2003 (2003-11-25), pages 1-20,
XP002307590 Extrait de l'Internet:
URL:http://www.ces.ch/documents/downloads/
afdx_white_paper.pdf> [extrait le 2004-11-25]**
• **TECH S.A.T. GMBH: "ADFX-PM-2CTR Versatile
High Performance AFDX Bus Interface"[Online]
11 avril 2003 (2003-04-11), pages 1-2,
XP002307555 Extrait de l'Internet:
URL:http://web.archive.org/web/20030411225
527/217.6.59.26/download/afdx/afdx_pmc_2ct
r_datasheet.pdf> [extrait le 2004-11-25]**
• **SANCHEZ-PUEBLA, M A; CARRETERO J: "A new
approach for distributed computing in avionics
systems" ISICT '03. PROCEEDINGS OF THE 1ST
INTERNATIONAL SYMPOSIUM ON
INFORMATION AND COMMUNICATION
TECHNOLOGIES, 24 septembre 2003
(2003-09-24), pages 579-584, XP002307664**
• **PELESKA J: "Automated Test Suites for Modern
Aircraft Controllers"[Online] 14 janvier 2003
(2003-01-14), pages 1-10, XP002307665 Extrait de
l'Internet:
URL:http://www.informatik.uni-bremen.de/ag
bs/jp/papers/rss2003_peleska.ps> [extrait le
2004-11-26]**

Remarques:
Le dossier contient des informations techniques
présentées postérieurement au dépôt de la demande
et ne figurant pas dans le présent fascicule.

**Description**

**DOMAINE TECHNIQUE**

La présente invention concerne un système de simulation et de test d'au moins un équipement sur un réseau AFDX.

**ÉTAT DE LA TECHNIQUE ANTÉRIEURE**

Le document, référencé [1] en fin de description, décrit un système de test en vol à base d'un réseau de communication redondant de type éthernet full-duplex commuté, dit « réseau AFDX ».

Le domaine technique auquel l'invention s'applique est celui de la simulation d'équipements absents sur un tel réseau avion AFDX (« Avionics Full Duplex ») ou de test d'un tel réseau. Dans ce domaine il est connu d'utiliser des cartes électroniques spécifiques, telles que proposées par exemple dans les documents référencés [2] et [3].

Dans un simulateur d'intégration ou banc de test, le besoin d'intégrer ensemble des équipements réels et des équipements simulés est incontournable. Dans le cadre d'équipements dialoguant avec un réseau AFDX, il s'agit de trouver une architecture réseau simple capable de gérer plusieurs équipements AFDX simulés et représentative des comportements temps réel des équipements réels.

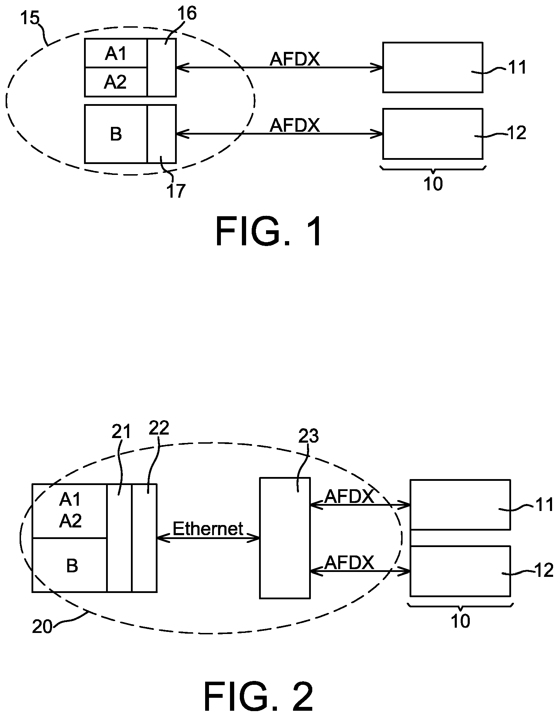

Actuellement,les cartes AFDX disponibles sur le marché correspondent à un seul équipement (« mono End System »). Il est donc nécessaire d'avoir autant de cartes AFDX que d'équipements à simuler. La figure 1 illustre une architecture de simulation dans un exemple d'une telle configuration réseau.

Dans cette architecture de simulation, il s'agit d'accueillir sur le réseau AFDX 10 deux équipements à simuler A et B. Ces équipements sont connectés respectivement aux commutateurs spécifiques AFDX 11 et 12. Vu du réseau 10, les informations échangées doivent respecter les contraintes temps réel exigées par les commutateurs. Dans le système matériel et logiciel de simulation 15 sont hébergés ces deux équipements à simuler A et B, sous la forme de fonctions A1, A2 et B. Pour chaque équipement le transfert des données AFDX est réalisé par un contrôleur spécifique AFDX 16 ou 17. Ces contrôleurs AFDX 16 et 17 respectent les contraintes temps réel exigées pour ce type de matériel. Ces contraintes sont plus exigeantes que celles attendues par les commutateurs AFDX.

Comme dans le cadre d'un simulateur d'intégration de grande envergure, le nombre d'équipements à simuler peut dépasser la cinquantaine. Une telle solution devient très vite onéreuse et lourde à mettre en place.

L'invention a pour objet de s'affranchir d'une telle contrainte et de permettre de simuler au moins un équipement, à partir de produits sur étagères (« Cots » ou « Commercial off the shelf »).

L'article référencé [4] en fin de description décrit les caractéristiques du bus AFDX, du protocole AFDX, et l'architecture d'un système AFDX.

**EXPOSÉ DE L'INVENTION**

L'invention concerne un système de test d'un réseau AFDX comportant au moins un équipement réel, caractérisé en ce qu'il comprend :

- des moyens de simulation d'au-moins un équipement à simuler comprenant des sous-ensembles logiciels constitués de fonction des équipements simulés, appelées modèles (M1, .. M4), ces moyens comprenant :

  • des moyens de formatage de données de simulation pour obtenir une trame Ethernet et AFDX et des moyens séquenceurs de trame de données AFDX à destination du réseau AFDX suivant ces moyens de formatage de données de simulation,
  • des moyens de déformatage permettant la réception et la mise au format de données AFDX en provenance du réseau AFDX dans un format utilisable par les modèles,

- au moins un commutateur Ethernet du commerce connecté aux moyens de simulation par une liaison Ethernet et au réseau AFDX par au moins une liaison AFDX.

Avantageusement chaque liaison Ethernet est une liaison 1Gb/s et chaque liaison AFDX est une liaison 100 Mb/s.

Dans une simulation multi-équipements le commutateur peut-être un commutateur du commerce configuré pour ségréguer différents sous-réseaux et router les trames Ethernet sortantes vers des ports connectés au réseau et les trames Ethernet entrantes vers l'organe de traitement.

Avantageusement chaque commutateur Ethernet est tel que :

- il est conforme aux exigence de la norme IEEE 802.3 qui définit la trame Ethernet et la couche physique,
- il possède un port 1 GBits/s et deux ports 100Mbits/s pour le lissage,
- il possède autant de ports 100Mbits/s que d'équipements à simuler,
- il route des messages à partir de l'adresse MAC destination,
- il gère le nombre total d'adresses MAC « multicast » qui correspond au nombre de liens virtuels,
- il interdit le routage d'un message lorsque celui-ci a déjà été routé une première fois,
- il est paramétrable à distance par la configuration d'une table statique.

L'invention concerne également un simulateur avion utilisant un système de simulation, tel que défini ci-dessus comportant :

- un atelier de simulation dont la fonctionnalité est d'accueillir des modèles ou des fonctions avioniques et de communiquer avec d'autres ensembles logiciels via un flux de donnée,
- une zone de donnée où sont disponibles le contenu des informations avioniques des messages AFDX,
- un moteur d'entrée/sortie réveillé par une horloge et regroupant les fonctions de formatage, déformatage et séquenceur de trame.

## BRÈVE DESCRIPTION DES DESSINS

La figure 1 illustre une architecture de l'art connu.
La figure 2 illustre l'architecture du système de l'invention.
La figure 3 illustre la notion de géographie réseau.
La figure 4 illustre un premier mode de réalisation du système de l'invention.
La figure 5 illustre la contrainte de BAG.
La figure 6 illustre le phénomène de « jitter ».
La figure 7 illustre le mécanisme de lissage des fluctuations du BAG.
La figure 8 illustre une application du système de l'invention dans le cadre d'un simulateur avion,
La figure 9 illustre un second mode de réalisation du système de l'invention.

## EXPOSE DETAILLE DE MODES DE REALISATION PARTICULIERS

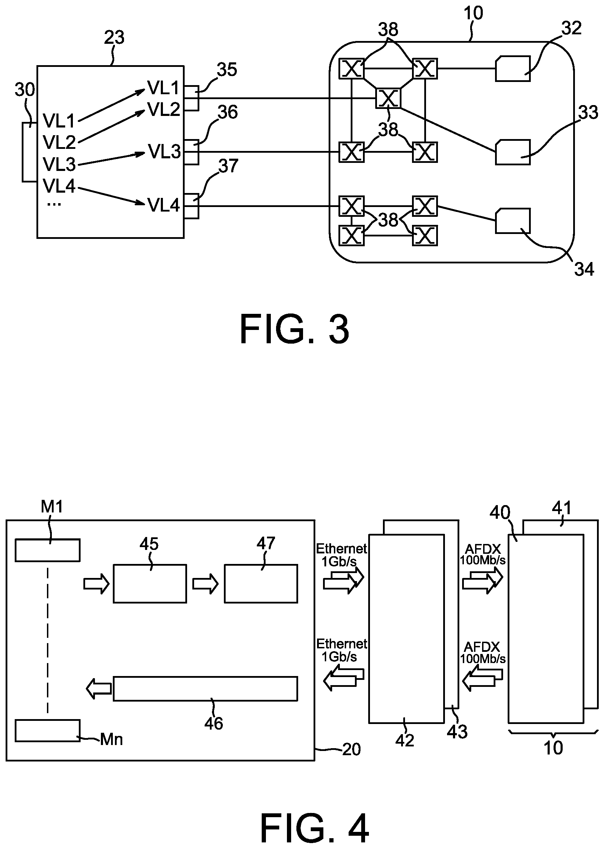

La figure 2 illustre le système de simulation de l'invention, qui utilise un contrôleur Ethernet 22 dédié à l'émulation AFDX et un commutateur du commerce 23, permettant de répondre au même besoin que celui de l'architecture de la figure 1. Dans ce système les transferts des données AFDX sont réalisés par une couche de simulation AFDX 21 pilotant le contrôleur Ethernet 22, la commutation de ces données étant assurée par le commutateur Ethernet du commerce 23.
Pour illustrer le besoin de commutation de donnée demandé au commutateur Ethernet 23, on considère l'exemple de trois équipements à simuler sur le réseau 10, comme illustré sur la figure 3. Les informations provenant du système de simulation et destinées au réseau 10 arrivent sur le port de connexion du commutateur Ethernet 23 via un port physique 30 du système. Chaque donnée provenant d'un équipement simulé est dirigée alors vers un port de sortie 35, 36 ou 37 du commutateur Ethernet 23 relié au commutateur 38 correspondant à cet équipement. Un port de sortie est dénommé port émulant l'un des équipements simulé. Sur cette figure sont ainsi représentés des équipements réels 32, 33 et 34.
Pour schématiser le fonctionnement interne demandé au commutateur Ethernet, les chemins que prennent les différentes données sont regroupées par lien virtuel (« Virtual Link » ou VL) pour chaque équipement. Un lien virtuel est un chemin logique entre un équipement émetteur et n équipements récepteurs sur lesquels circulent les informations. Dans un réseau AFDX, deux équipements distincts sont reliés entre eux par un ou plusieurs commutateurs 38.
Au niveau physique,les trames Ethernet et AFDX sont identiques, aussi les protocoles AFDX sont émulables avec des protocoles de communication standard et les commutateurs Ethernet 23 et AFDX 38 peuvent échanger des trames sans difficulté.
En émission, le trafic AFDX des différents équipements est multiplexé au niveau de la carte Ethernet 22, et le commutateur Ethernet 23 se charge d'effectuer le routage des liens virtuels vers les différents ports 35, 36, 37 qui représentent chacun un équipement simulé.
En réception, on a le processus inverse. Le commutateur 23 reçoit le trafic en provenance du réseau 10 et filtre les données intéressantes pour le modèle de simulation, vers la carte Ethernet 22 du système 20.
Dans une telle architecture, les problèmes qui se posent sont liés aux fonctionnalités additionnelles du réseau AFDX, telles que la gestion de la bande passante, les contraintes de temps associées, ou la redondance. Le système devient donc responsable du formatage et du déformatage des trames conformément aux spécifications AFDX. On entend par formatage, l'encapsulation des données par les couches UDP (« User Datagram Protocol »), IP (« Internet Protocol »), Ethernet puis AFDX.

Mais,la principale interrogation qui se pose est la capacité de cette architecture à respecter les contraintes de temps liées au réseau AFDX, en particulier la régularité des émissions sur chaque lien virtuel, de manière à minimiser le « jitter »(ou gigue).

La figure 4 représente un premier mode de réalisation du système de l'invention.

Chaque redondance 40 et 41 du réseau 10 est connectée à un commutateur Ethernet 42 et 43 par des liens 10/100Mb/s émulant les équipements à simuler. Ces commutateurs 42 et 43 accueillent une connection Ethernet 1Gb/s par réseau vers le système de simulation 20. Ce système de simulation héberge des sous-ensembles logiciels constitués de fonctions des équipements simulés, appelées modèles $M1....M_n$ des fonctions de communication vers les commutateurs 42 et 43. Ces fonctions de communication sont le formatage 45 permettant la mise au format de données de simulation pour obtenir une trame Ethernet et AFDX, le déformatage 46 permettant la réception et la mise au format de données AFDX dans un format utilisable par les modèles et le séquenceur de trame 47 permettant la gestion de l'émission temporelle des données AFDX à destination du réseau 10.

L'utilisation d'un commutateur 42 ou 43 permet de réduire les contraintes temps réel sur les émission de trames AFDX et de distribuer les liens virtuels des différents équipements à simuler.

Plus le nombre d'équipements simulés émetteurs est important, plus le nombre de liens virtuels et à fortiori le nombre de messages l'est aussi. Ainsi, le respect des contraintes temps réel en sortie du système est directement lié au temps nécessaire par le système d'exploitation pour traiter un message. L'utilisation dans le système d'un processeur puissant et d'un système d'exploitation temps réel permet d'assurer les contraintes temps réel de communication avec protocole standard et de respecter les contraintes temps réel du commutateur 40 ou 41.

Le module logiciel de formatage des trames 45 s'occupe de répondre aux exigences en émission de la norme AFDX. Ses principales tâches sont de changer l'adresse MAC (« Media Access Control ») source pour simuler un équipement réel, de changer l'adresse MAC destination pour adresser le lien virtuel concerné et de calculer un numéro SN (« Sequence number ») par lien virtuel en fin de message pour gérer la redondance à l'émission.

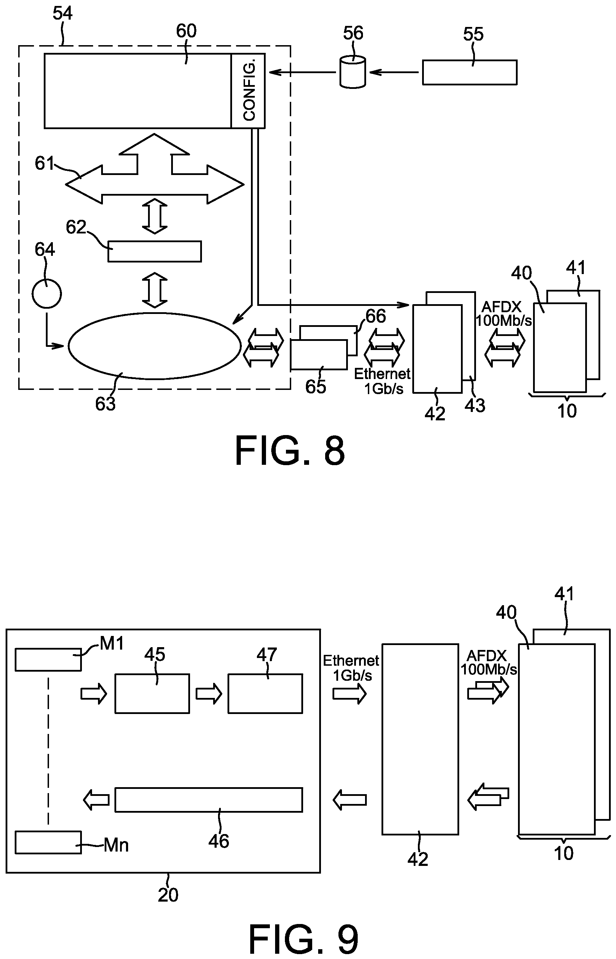

Pour émettre sur les deux réseaux 40 et 41, le système de simulation 20 utilise deux contrôleurs Ethernet distincts (voir références 65 et 66 sur la figure 8), eux-mêmes couplés à deux commutateurs Ethernet distincts 42 et 43.

Le module logiciel de déformatage des trames 46 s'occupe de répondre aux exigences en réception de la norme AFDX. La redondance à la réception d'effectue par un contrôle d'intégrité IC (« Integrity checking ») et les données utiles (« payload ») sont stockées, à la disposition des modèles Ml...Mn qui le désirent.

On va à présent considérer différents points caractéristiques du système de l'invention.

## Algorithme de placement et séquenceur de trames

Le module séquenceur de trames 47 et un algorithme de placement permettent d'émettre depuis le système de simulation 20 l'ensemble des messages produits par les équipements simulés en respectant les contraintes de BAG(« Bandwidth Allocation Gap »)/jitter sur les liens virtuels auxquels ils appartiennent.

Le module séquenceur de trame est réveillé de manière cyclique par une horloge (« timer ») pour émettre les messages déterminés par l'algorithme de placement. La fréquence de l'horloge du séquenceur est aussi un résultat de l'algorithme.

L'objet de l'algorithme de placement est donc de trouver la liste des messages AFDX devant être émis en garantissant les contraintes de BAG/jitter du lien virtuel et la période d'émission des messages. La période d'émission, qui est une donnée propre à un message, est exprimée en millisecondes et doit forcément être supérieure au BAG du lien virtuel auquel appartient le message.

La carte Ethernet 22 est supposée déterministe, c'est-à-dire que, pour toute information, on prévoit la durée précise que prendra son émission par la carte. De plus, le réseau est supposé idéal : si l'on a une durée d entre l'émission de deux messages successifs d'un même lien virtuel, cette durée d est retrouvée en réception.

De manière à se positionner sur des intervalles de 128 ms (valeur maximale que peut prendre le BAG d'un lien virtuel), l'algorithme de placement a adopté les simplifications suivantes. La période d'émission des messages est « baguisée » en choisissant une fréquence d'émission dite simulée qui correspond à max { 2n.BAGVL tel que n>0 et 2n.BAGVL $\leq$ 128 ms et 2n.BAGVL $\leq$ PériodeMessage }. On rajoute donc l'hypothèse que le réseau accepte une réduction des périodes des messages.

L'algorithme de placement considère en entrée, l'ensemble des liens virtuels à émettre sur le contrôleur Ethernet. Chaque information lien virtuel contient le BAG du lien virtuel, le jitter du lien virtuel, les tailles des « payloads » des messages et la période des messages.

Le résultat de l'algorithme de placement est un chronogramme d'émission.

Pour chacun des intervalles, de durée BAGmini,le résultat précise quels messages de quels liens virtuels sont émis. Dans le module séquenceur de trames 47, il s'agit d'une émission « à la volée », sans compteur de temps. Dès qu'un message a fini d'être émis, le suivant est émis jusqu'à ce que tous les messages de l'intervalle soient émis. A ce moment, le module attend le début de l'intervalle suivant pour reprendre les émissions.

Les contraintes BAG/jitter participent à la réduction du nombre d'émetteurs simulés que l'on peut placer sur la carte Ethernet 23. En effet, elles nécessitent une organisation des émissions, avec, parfois des temps d'attentes. Il arrive parfois que le respect des contraintes BAG/jitter nécessite d'attendre pour émettre le message suivant. Dans ce cas, le chronogramme d'émission précise que l'on émet un message appelé « VL FAUX », dont la taille de « payload » est précisée. En pratique, cela se fait par l'émission d'une trame avec une adresse MAC spécifique, qui est routée vers un port sans issue dans le commutateur.

## Mécanisme de lissage des fluctuations du BAG

L'algorithme précédent suppose que les trames d'un lien virtuel sont espacées exactement de BAG millisecondes.

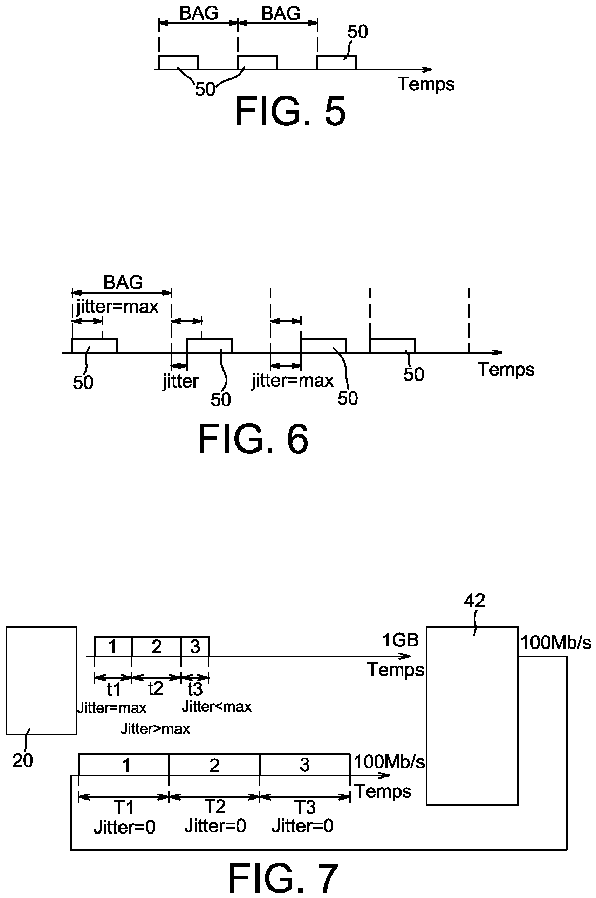

La figure 5 illustre la notion de BAG auquel les messages AFDX par lien virtuel doivent répondre. Il s'agit de l'intervalle de temps minimum séparant l'émission de deux trames 50 consécutives.

Cependant, dans la réalité,les contraintes du matériel d'une part et de sa mise en oeuvre d'autre part (un équipement émet sur plusieurs liens virtuels) font que l'intervalle entre les trames peut fluctuer : c'est le phénomène de jitter.

La figure 6 représente une autre notion associée au contrôle de flux demandé lors de l'émission de trames AFDX. Il s'agit, pour un lien virtuel, du jitter max admissible à l'intérieur duquel la contrainte du BAG est considérée comme acceptable.

Ainsi, pour se rapprocher au maximum des hypothèses imposées par l'algorithme de placement, c'est-à-dire un réseau idéal et un contrôleur Ethernet déterministe, et garantir le respect de la contrainte jitter max, les messages des différents liens virtuels sont émis sur un réseau Gigabit entre le contrôleur Ethernet du système et le commutateur 42 ou 43. Ensuite, par configuration du commutateur 42 ou 43, ce flux de données est rebouclé sur un ou plusieurs ports d'entrée 100Mbits/s.

De cette manière,malgré la valeur du jitter introduite par le système d'exploitation et le contrôleur Ethernet en sortie du système, le transfert 10 fois plus rapide des messages fait qu'au niveau du port Gigabit (ou 1 gigabits/s) du commutateur 42 ou 43, il se produit une bufferisation des messages à reboucler sur le port 100Mbits/s (10 fois plus lent), si bien que le jitter est totalement absorbé et ramené à une valeur proche de zéro en sortie du port 100Mbits/s. Ce mécanisme de lissage permet ainsi de se rapprocher du chronogramme d'émission initial calculé par l'algorithme de placement.

La figure 7 illustre le mécanisme de lissage des fluctuations du BAG. Les trames AFDX sont émises depuis le système de simulation 20 sur un lien Gigabit avec un indéterminisme engendrant un phénomène de jitter. Le lien 1 Gigabits/s est réémis par le commutateur Ethernet 42 sur un lien 100 Megabits/s. Ce mécanisme ayant pour effet de dilater les temps d'émission (en théorie rapport 10) et ainsi d'absorber les jitters induits sur le lien Gigabit en un jitter se rapprochant de zéro sur le lien 100 Mégabits/s.

Pour illustrer ce mécanisme, considérons l'émission de 1500 octets, il faut environ 12 $\mu$s sur le réseau 1 Gbits/s et environ 115 $\mu$s sur le réseau 100Mbits/s. Ainsi, tant que la valeur du jitter introduite par le système d'exploitation et le contrôleur Ethernet est inférieure à 115 ps-12 $\mu$s soit environ 100 ps, le mécanisme de lissage peut absorber complètement le jitter.

## Configuration des commutateurs

Comme précédemment, le commutateur 42 intervient d'une part dans le mécanisme de lissage et se charge d'autre part d'effectuer le routage des liens virtuels. Cette solution utilise donc les commutateurs d'une manière particulière dans le sens où toutes leurs configurations sont statiques.

Ainsi pour chaque commutateur 42 ou 43, les VLAN (« Virtuel Lane Network ») ou commutateurs logiques suivants doivent être créés :

• Un VLAN « smoothing » pour le lissage des fluctuations du BAG,

• Un VLAN « application » pour le routage des liens virtuels vers les ports de sorties reliés au réseau réel, et pour le filtrage et l'autorisation des messages en provenance du réseau réel vers le système.

Chaque commutateur 42 ou 43 doit donc posséder au minimum les capacités suivantes :

- être conforme aux exigence de la norme IEEE 802.3 qui définit la trame Ethernet et la couche physique,
- posséder un port 1 GBits/s et deux ports 100Mbits/s pour le lissage,
- posséder autant de ports 100MBits/s que d'équipements à simuler,
- pouvoir de router des messages à partir de l'adresse MAC destination (commutation au niveau 2 du modèle OSI),
- être capable de gérer le nombre total d'adresses MAC « multicast » (ou multidestinataires) qui correspond au nombre de liens virtuels,
- pouvoir interdire le routage d'un message lorsque celui-ci a déjà été routé une première fois,
- être paramétrable à distance par le configuration d'une table statique.

Pour s'affranchir de tout trafic parasite, les protocoles propriétaires (CDP, VTP...) ou non nécessaires (ARP (« Adress Resolution Prolocol »), IGMP..) peuvent être désactivés.

Mise en oeuvre dans un simulateur avion

La figure 8 propose une application du système de l'invention dans le cadre d'un simulateur avion 54, pour simuler les calculateurs embarqués. Elle illustre l'architecture logicielle détaillée mise en place sur un simulateur avion
Dans ce simulateur, l'architecture logicielle du système de simulation de l'invention comprend une structure d'accueil des modèles à simuler, des fichiers de configurations, des moteurs d'entrée/sortie et des zones mémoires d'échanges de données.
Une phase de production 55 permet de générer les fichiers de configuration 56 nécessaire à l'environnement de simulation.
L'environnement logiciel de simulation est constitué :

- d'un atelier de simulation 60 dont la fonctionnalité est d'accueillir des modèles ou des fonctions avioniques et de communiquer avec d'autres ensembles logiciels via un flux de donnée 61.
- D'une zone de donnée 62 appelée zone entrée/sortie (E/S) AFDX où sont disponibles le contenu des informations avioniques (« payload ») des messages AFDX,
- D'un moteur d'entrée-sortie AFDX 63 réveillé par une horloge 64 et regroupant les fonctions de formatage, déformatage et séquenceur de trame.

Sur cette figure sont également représentés les contrôleurs Ethernet 65 et 66.
Dans cette application, la production des paramètres nécessaires à la mise en oeuvre des communications AFDX s'effectue à partir d'une référence et est stockée dans différents fichiers.
L'échange des données AFDX entre les modèles de simulation et le mécanisme d'entrée/sortie du simulateur s'effectue à travers une mémoire partagée (zone E/S AFDX).
Le séquenceur du moteur 63 est réveillé par l'horloge 64 suivant le chronogramme d'émission des liens virtuels.
Les mesures de performances suivantes ont été faits dans le cadre de ce simulateur.
Les caractéristiques du sytème de simulation sont les suivants :

- station Digital Alpha, quadri-processeur,
- système d'exploitation Tru64 Unix.

Les hypothèses relatives aux équipements simulés sont les suivantes:
- nombre de ports AFDX redondés : 58,
- nombre de liens virtuels en émission en fonction du BAG :

| BAG (ms) | 8 | 16 | 32 | TOTAL |
|---|---|---|---|---|
| Nbre de liens virtuels | 8 | 203 | 100 | 311 |
| Bande passante (Mbits/sec) | 3,7 | 47,4 | 11,7 | 62,8 |

Chaque lien virtuel comprend un message de 400 octets. Cette taille correspond aux données applicatives (« payload ») échangées au travers du protocole UDP/IP. Avec les entêtes des différents protocoles (UDP, IP, MAC, AFDX), cela correspond à une taille de paquet de 400+67=467 octets.
- nombre de liens virtuels en réception en fonction du BAG :

| BAG (ms) | 4 | 8 | 16 | 32 | TOTAL |
|---|---|---|---|---|---|
| Nbre de liens virtuels | 38 | 94 | 326 | 210 | 668 |
| Bande passante (Mbits/sec) | 35,5 | 43,9 | 76,1 | 24,5 | 180,0 |

Les systèmes simulés ne s'abonnent pas à tous les liens virtuels : seulement à 10%.

Une première série de mesures a été réalisée avec un analyseur matériel en sortie du système pour quantifier précisément le jitter introduit par le système (« Operating System » + « driver » carte + carte Ethernet) lorsque l'algorithme de placement est mis en oeuvre :

$$10 < Jitter \ (\mu s) \ < 100$$

Des mesures complémentaires ont permis d'attribuer 3 $\mu$s de jitter dû au réveil du séquenceur.

Une deuxième série de mesures a été réalisée avec un analyseur matériel en entrée du port 100Mbits/s du commutateur Ethernet pour caractériser l'absorption du jitter par le mécanisme de lissage :

$$3 < Jitter \ (\mu s) \ < 10$$

Les résultats obtenus ci-dessus montrent toute l'efficacité du lissage et démontre que l'architecture de l'invention est compatible du jitter maximum le plus sévère (coefficient x1).

Autres solutions possibles

La solution retenue ci-dessus dans le cadre du simulateur d'intégration avion peut être :

- simplifiée pour être mise en oeuvre dans des bancs d'essai plus petits ou sans contraintes temps réel sévères,
- dupliquée pour être mise en oeuvre dans des bancs d'essai plus grands ou avec des composants COTS moins puissants,
- optimisée dans le cas où le réseau n'accepte pas une réduction des périodes de messages ou dans le cas où la liste des équipements simulés est dynamique,
- réutilisée pour générer des émulateurs d'équipements.

**Diminution du nombre de composants COTS**

Dans le cadre de bancs d'essai plus petit, la solution de traiter la redondance AFDX (réseau A et réseau B) avec deux contrôleurs/ commutateurs Ethernet différents est abandonnée. En effet, si la bande passante nécessaire aux deux réseaux est inférieure à 100Mbits/s, alors l'utilisation d'un seul couple contrôleur/commutateur Ethernet est suffisant. Le schéma de la figure 9 est une simplification de l'architecture décrite figure 4. La configuration commutateur Ethernet est réduite à un seul commutateur sur lequel circulent les informations redondées sur les réseaux avions (réseau A et réseau B).

l'algorithme de placement est modifié de manière à prendre en compte les liens virtuels des deux réseaux. Pour différencier les liens virtuels du réseau A de ceux du réseau B, le commutateur Ethernet est alors capable de filtrer les messages entrant par leur adresse MAC source.

**Suppression du réseau Gigabit**

Si le réseau gigabit ne nécessite pas de contraintes temps réel sévères, le mécanisme de lissage est supprimé. Ainsi, une telle solution utilise directement un lien 100Mbits/s en sortie du système.

**Augmentation du nombre de composants COTS**

A l'inverse, dans le cadre de bancs d'essais où les caractéristiques des composants COTS ne permettent pas d'appliquer la solution telle quelle (trop de message à émettre, trop de liens virtuels à router, ...), plusieurs contrôleurs ou commutateurs Ethernet sont utilisés en parallèle pour répartir la charge des liens virtuels.

Dans l'hypothèse où le réseau n'accepte pas une réduction des périodes des messages, l'algorithme de placement est modifié de manière à ne plus « baguiser » la période d'émission des messages.

Comme décrit précédemment, les fichiers de configurations nécessaires à la mise ne oeuvre des communications AFDX sont produits une fois pour toute avant le démarrage de la simulation. Si la configuration d'équipements à simuler n'est pas connue d'avance ou que les caractéristiques des équipements à simuler changent, la phase de production dont l'algorithme de placement est appelé à chaque nouvelle configuration. Ces chronogrammes peuvent être conservés pour accélérer le traitement dans le cas d'une configuration déjà demandée précédemment.

**Emulateur d'équipement**

On peut réutiliser des logiciels du système de l'invention dans un environnement de type PC (« Personal Computer ») disposant d'une horloge et de cartes Ethernet.

L'entrée du séquenceur de trame peut être une source différente de l'algorithme de placement comme par exemple un fichier d'enregistrement AFDX ou des données provenant de modélisation de réseau AFDX.

Ainsi on a réalisé un émulateur type mono-équipement (« mono End System »), l'adjonction d'un commutateur permettant de répondre au besoin d'émulateurs multi-équipements (« multi End System »).

**REFERENCES**

[1] « An AFDX-based flight test system » de Hervé Gâchette, Philippe Rico et François-Henri Worm (Creative Electronic Systems; Adresse Internet: http://www.sfte.org/newsletter/euro_4-1.pdf, mai 2004.)

[2] « AIM to provide common standard AFDX databus analysers for the Airbus A 380 » (revue de presse de la société AIM à l'adresse internet : http://www.airforcetechnology.com/contractors/manufactu ring/aim/press1.html, 17 octobre 2003.)

[3] « AIM's new PMC card supports avionics testing for AFDX and ARINC-664 applications on the A 380/A 400M and B 7E7 Aircraft" (revue de presse de la société AIM à l'adresse internet : http://www.airforce-technology.com/contractors/manufacturing/aim/press3.htm 1, 18 février 2004.)

[4] « CES white paper on AFDX » du 25 novembre 2003 (2003-11-25) (pages 1-20, XP002307590.)

**Revendications**

1. Système de test d'un réseau AFDX, Avionics Full Duplex, (10) comportant au moins un équipement réel **caractérisé en ce qu'**il comprend :

   - des moyens (20) de simulation d'au moins un équipement à simuler comprenant des sous-ensembles logiciels constitués de fonctions des équipements à simuler, appelées modèles (M1, .. M4), ces moyens (20) comprenant :

       • des moyens (45) de formatage de données de simulation pour obtenir une trame Ethernet et AFDX et des moyens séquenceurs de trame (47) de données AFDX à destination du réseau AFDX (10) suivant ces moyens (45) de formatage de données de simulation,
       • des moyens (46) de déformatage permettant la réception et la mise au format de données AFDX en provenance du réseau AFDX (10) dans un format utilisable par les modèles,

   - au moins un commutateur Ethernet du commerce (42, 43) connecté aux moyens de simulation (20) par une liaison Ethernet et adapté pour se connecter au réseau AFDX (10) par au moins une liaison AFDX.

2. Système selon la revendication 1, dans lequel chaque liaison Ethernet est une liaison 1Gb/s et chaque liaison AFDX est une liaison 100 Mb/s.

3. Système selon la revendication 1, dans lequel, dans une simulation multi-équipements, le au moins un commutateur Ethernet (42) est configuré pour ségréguer différents sous-réseaux et router les trames Ethernet sortantes vers des ports connectés au réseau AFDX (10) et les trames Ethernet entrantes vers les moyens d'émulation AFDX (22).

4. Système selon la revendication 1, dans lequel chaque commutateur Ethernet (42 ou 43) est tel que :

- • il est conforme aux exigences de la norme IEEE 802.3 qui définit la trame Ethernet et la couche physique,
- • il possède un port 1 GBits/s et deux ports 100Mbits/s pour le lissage,
- • il possède autant de ports 100Mbits/s que d'équipements à simuler,
- • il route des messages à partir de l'adresse MAC destination,
- • il gère le nombre total d'adresses MAC « multicast » qui correspond au nombre de liens virtuels,
- • il interdit le routage d'un message lorsque celui-ci a déjà été routé une première fois,
- • il est paramétrable à distance par la configuration d'une table statique.

5. Système selon l'une quelconque des revendications précédentes, dans lequel les moyens de simulation comportent :

- • des moyens (60) d'accueil de modèles avioniques à simuler et de communication avec d'autres ensembles logiciels via un flux de donnée (61),
- • une zone mémoire de données (62) où sont disponibles le contenu d'informations avioniques de messages AFDX,
- • des moyens d'entrée/sortie AFDX (63) regroupant des fonctions de formatage, déformatage et séquenceur de trame.

**Patentansprüche**

1. System zur Prüfung eines AFDX-Netzwerks, Avionics Full Duplex, (10) mit mindestens einer realen Vorrichtung, **dadurch gekennzeichnet, dass** es umfasst:

- Mittel (20) zur Simulation mindestens einer zu simulierenden Vorrichtung, umfassend Softwareuntereinheiten, die aus Funktionen der zu simulierenden Vorrichtungen bestehen, Modelle (M1, .. M4) genannt, wobei diese Mittel (20) umfassen:

- • Mittel (45) zur Formatierung von Simulationsdaten, um einen Ethernet- und AFDX-Rahmen zu erhalten, und Rahmensequenzierungsmittel (47) für AFDX-Daten, die für das AFDX-Netzwerk (10) bestimmt sind, die auf diese Mittel (45) zur Formatierung von Simulationsdaten folgen,
- • Mittel (46) zur Deformatierung, die das Empfangen und das Insformatbringen von AFDX-Daten, die vom AFDX-Netzwerk (10) kommen, in ein von den Modellen verwendbares Format ermöglichen,

- mindestens einen Ethernet-Switch (42, 43), der mit den Simulationsmitteln (20) über eine Ethernetverbindung verbunden ist und geeignet ist, sich über mindestens eine AFDX-Verbindung mit dem AFDX-Netzwerk (10) zu verbinden.

2. System nach Anspruch 1, wobei jede Ethernetverbindung eine 1 Gbit/s-Verbindung und jede AFDX-Verbindung eine 100 Mbit/s-Verbindung ist.

3. System nach Anspruch 1, wobei bei einer Simulation von mehreren Vorrichtungen der mindestens eine Ethernet-Switch (42) dazu konfiguriert ist, verschiedene Teilnetze abzutrennen und die ausgehenden Ethernetrahmen zu Ports, die mit dem AFDX-Netzwerk (10) verbunden sind, und die eingehenden Ethernetrahmen zu den Mitteln zur AFDX-Emulation (22) zu routen.

4. System nach Anspruch 1, wobei jeder Ethernet-Switch (42 oder 43) derart ist, dass:

- • er die Anforderungen der Norm IEEE 802.3 erfüllt, die den Ethernetrahmen und die physische Schicht definiert,
- • er einen 1 Gbit/s-Port und zwei 100 Mbit/s-Ports zur Glättung besitzt,
- • er ebenso viele 100 Mbit/s-Ports besitzt wie Vorrichtungen zu simulieren sind,
- • er Nachrichten ausgehend von der Ziel-MAC-Adresse routet,
- • er die Gesamtzahl von "Multicast"-MAC-Adressen verwaltet, die der Anzahl virtueller Verbindungen entspricht,
- • er das Routen einer Nachricht unterbindet, wenn diese bereits ein erstes Mal geroutet wurde,
- • er durch die Konfiguration einer statischen Tabelle aus der Ferne konfigurierbar ist.

**5.** System nach einem der vorhergehenden Ansprüche, wobei die Simulationsmittel umfassen:

• Mittel (60) zur Aufnahme von zu simulierenden Avionikmodellen und zur Kommunikation mit anderen Softwareeinheiten über einen Datenfluss (61),
• einen Datenspeicherbereich (62), in dem der Inhalt von Avionikinformationen von AFDX-Nachrichten verfügbar ist,
• AFDX-Eingangs-/Ausgangsmittel (63), die Funktionen zur Formatierung, Deformatierung und Sequenzierung von Rahmen beinhalten.

**Claims**

**1.** System for testing an AFDX network (10) comprising at least one real item of equipment, **characterised in that** it includes:

- simulation means (20) for simulating at least one item of equipment to simulate comprising software sub-sets consisting of functions of the items of equipment to simulate, named models (M1, ..., M4), these means (20) including:

• formatting means (45) for formatting simulation data to obtain an Ethernet frame and AFDX frame and frame sequencer means (47) for sequencing AFDX data frames to the AFDX network (10) according to these simulation data formatting means (45),
• deformatting means (46) enabling reception and formatting of AFDX data from the AFDX network (10) in a format that can be used by the models,

- at least one commercially available Ethernet switch (42, 43) linked to the simulation means (20) through an Ethernet link and adapted to connect to the AFDX network through at least one AFDX link.

**2.** System according to claim 1, in which each Ethernet link is a 1 Gb/s link, and each AFDX link is a 100 Mb/s link.

**3.** System according to claim 1, in which in a multi-system simulation, the at least one Ethernet switch (42) is configured to segregate different sub-networks and to route outgoing Ethernet frames to ports connected to the AFDX network (10) and incoming Ethernet frames to the AFDX emulation means (22).

**4.** System according to claim 1, in which each Ethernet switch (42 or 43) is such that:

• it complies with the requirements of standard IEEE 802.3 that defines the Ethernet frame and the physical layer,
• it has one 1 GBit/s port and two 100 Mbits/s ports for smoothing,
• it has one 100 Mbits/s port for each item of equipment to be simulated,
• it routes messages from the destination MAC address,
• it manages the total number of "multicast" MAC addresses that corresponds to the number of virtual links,
• it prevents routing of a message if the message has already been routed once,
• it can be remote configured by configuration of a static table.

**5.** System according to any one of the above claims, wherein the simulation means include:

• hosting means (60) for hosting avionics models to simulate and for communicating with other software sets through a data flow (61),
• a data memory zone (62) in which the contents of avionics information in AFDX messages are available,
• an AFDX input/output engine (63) including formatting, deformatting and frame sequencing functions.

FIG. 1

FIG. 2

EP 1 583 289 B1

FIG. 3

FIG. 4

12

FIG. 5

FIG. 6

FIG. 7

FIG. 8

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE HERVÉ GÂCHETTE ; PHILIPPE RICO ; FRANÇOIS-HENRI WORM.** An AFDX-based flight test system. *Creative Electronic Systems; Adresse Internet,* Mai 2004, http://www.sfte.org/newsletter/euro_4-1.pdf

- AIM's new PMC card supports avionics testing for AFDX and ARINC-664 applications on the A 380/A 400M and B 7E7 Aircraft. société AIM, 18 Février 2004
- *CES white paper on AFDX,* 25 Novembre 2003, 1-20